# EUROPÄISCHE PATENTSCHRIFT

(11) **EP 1 673 273 B1**
(45) Veröffentlichungstag und Bekanntmachung des Hinweises auf die Patenterteilung: **23.12.2009**
(21) Anmeldenummer: 04790218.4
(22) Anmeldetag: 08.10.2004
(51) Int. Cl.: B62D 29/00, B62D 25/14, B62D 21/17

(54) **BAUTEIL UND VERWENDUNG EINES DERARTIGEN BAUTEILS SOWIE VERFHAREN ZUR HERSTELLUNG EINES BAUTEILS**
COMPONENT AND USE THEREOF AND METHOD FOR THE PRODUCTION THEREOF
COMPOSANT, SON PROCEDE DE PRODUCTION ET SON UTILISATION

(30) Priorität: 08.10.2003 DE 10347230; 02.03.2004 DE 102004010606
(43) Veröffentlichungstag der Anmeldung: 28.06.2006
(73) Patentinhaber: Behr GmbH & Co. KG, 70469 Stuttgart (DE)
(72) Erfinder: MERKLE, Christian, 73655 Plüderhausen (DE); WOLF, Walter, 71570 Oppenweiler-Zell (DE)
(86) Internationale Anmeldenummer: PCT/EP2004/011281
(87) Internationale Veröffentlichungsnummer: WO 2005/035339

(56) Entgegenhaltungen:
- EP-A- 0 995 668
- EP-A- 1 232 935
- DE-A1- 19 930 001
- FR-A- 2 799 717

## Beschreibung

Die Erfindung betrifft ein Bauteil, insbesondere ein Hybridbauteil für einen Querträger, und die Verwendung eines derartigen Bauteils. Des Weiteren betrifft die Erfindung ein Verfahren zur Herstellung eines Bauteils.

Aus dem Kraftfahrzeugbau sind aus Hohlprofilen, z.B. aus einem Rohr oder einer Halbschale, gebildete Querträger bekannt, die aus Metall bestehen und entsprechend große Wandstärken aufweisen. Die Wandstärken sind dabei für eine ausreichende Form-, Biege-, Knick- und Torsionssteifigkeit sowie für eine ausreichende Druckbelastbarkeit entsprechend dick ausgeführt. Der als Hohlprofil ausgebildete Querträger eignet sich prinzipiell zur Luftführung, beispielsweise von einer mittig im Frontbereich des Fahrzeugs angeordneten Klimaanlage zu seitlichen Ausströmem hin.

Ein derartiges Bauteil ist beispielsweise aus der EP 0 995 668 A1 bekannt, welche ein Hohlkammer-Leichtbauteil, bestehend mindestens aus einem schalenförmigen Gehäuseteil aus hochfestem Werkstoff einer gerippten Stützstruktur aus Kunststoff, und wenigstens einer Deckplatte oder Deckschale aus einem, insbesondere von Kunststoff verschiedenen, hochfesten Werkstoff, zeigt. Die Stützstruktur ist dabei in ihrem Randbereich mit wenigstens einem Teil der Umrandung des Gehäuseteils verbunden, indem an unmittelbar aufeinander liegenden Stellen die Stützstruktur und das Gehäuseteil im Bereich von übereinander liegenden Durchbrüchen mittels spritzgegossener formschlüssiger Kunststoffverbindungen verbunden werden. Auch kann das Gehäuseteil teilweise oder vollständig mit thermoplastischen Kunststoff ummantelt oder umspritzt werden. Durch einen das metallische Gehäuseteil umgebenden Kunststoff kann es dabei zu Verformungen des Bauteils kommen. Auch ist die Gestaltungsfreiheit der Stützstruktur oder Kunststoffverstärkung begrenzt. Zudem bedarf es zur Herstellung der Durchknöpfung an den Durchbrüchen oder diskreten Verbindungsstellen eines aufwendigen Werkzeugs.

Ferner ist aus der den Oberbegriff des Anspruchs 1 definierenden DE 199 30 001 A1 ein Karosserieteil aus einem faserverstärktem Kunststoffformteil und einer damit verbundenen Außenhaut aus Metall bekannt.

Der Erfindung liegt daher die Aufgabe zu Grunde, ein Bauteil, insbesondere ein Hybridbauteil für einen Querträger eines Fahrzeugs anzugeben, welches besonders einfach aufgebaut ist und eine einfache Verbindung zwischen metallischem Grundkörper und Kunststoffstruktur aufweist.

Die Aufgabe hinsichtlich des Bauteils wird erfindungsgemäß gelöst durch die Merkmale des unabhängigen Anspruchs 1 und bezüglich der Verwendungen eines derartigen Bauteils durch die Merkmale der unabhängigen Ansprüche 17 bis 18. Hinsichtlich des Verfahrens zur Herstellung eines solchen Bauteils wird die Erfindung gelöst durch die Merkmale des unabhängigen Anspruchs 19.

Vorteilhafte Weiterbildungen der Erfindung sind Gegenstand der Unteransprüche.

Die Erfindung geht dabei von der Überlegung aus, dass anstelle eines aufwendigen Vorfertigens eines metallischen Grundkörpers mit Durchbrüchen zur Schaffung von diskreten Verbindungsstellen mit einer Kunststoffstruktur eine Verbindung von Grundkörper und Kunststoffstruktur ermöglicht sein sollte, die zudem ohne zusätzliche Elemente auskommt Darüber hinaus sollte die Verbindungsstelle eine möglichst gute flächenmäßige Kraftübertragung sicherstellten. Hierzu weist der metallische Grundkörper an seinem Randbereich ein angeformtes Fixierelement auf, anhand dessen die Kunststoffstruktur mit dem Grundkörper zumindest mechanisch fügbar ist. Mit anderen Worten: Die Verbindung des metallischen Grundkörpers mit der Kunststoffstruktur erfolgt an deren übereinander liegenden Rändern weitgehend mechanisch, indem das angeformte Fixierelement des Grundkörpers mechanisch umgeformt, insbesondere gebördelt, wird. Hierzu ist das angeformte Fixierelement bei einem als Hohlprofil ausgebildeten metallischen Grundkörper durch dessen in Längsachse verlaufenden, ein- oder beidseitigen, Rand selbst gebildet.

In der einfachsten Ausführungsform wird der über die gesamte Länge des Grundkörpers verlaufende Rand gebördelt, d.h. umgebogen. Unter Bördeln wird insbesondere das Umbiegen des Randes des Grundkörpers gegebenenfalls unter gleichzeitigem Strecken oder Stauchen des Randes, um diesen zu verstärken, verstanden, so dass der Grundkörper versteifend ausgebildet wird oder alternativ oder zusätzlich mit glatten Rand- oder Begrenzungsflächen versehen wird, an welchen zusätzlich der Grundkörper mit der Kunststoffstruktur verbunden werden kann, z.B. durch Löten, Verschrauben oder Falzen.

In erfindungsgemäßer Ausführungsform weist das als Rand ausgebildete Fixierelement des metallischen Grundkörpers eine Kammstruktur auf. Dabei wird der kammartige oder kronenartige Rand (= angeformtes Fixierelement) des metallischen Grundkörpers um den Randbereich der Kunststoffstruktur gebogen, insbesondere gebördelt, so dass der metallische Grundkörper mechanisch mit der Kunststoffstruktur verbunden ist. Ein kammartiger oder kronenartiger Rand kann neben der gebördelten Verbindung des Grundkörpers mit der Kunststoffstruktur durch entsprechende Ausbildung des Randbereichs der Kunststoffstruktur zusätzlich eine Rast- oder Klemmverbindung ermöglichen. Hierzu ist der Randbereich der Kunststoffstruktur mit einer in die Aussparung des kammartigen Rands des Grundkörpers korrespondierenden Oberflächenform oder Anformung ausgebildet.

Zusätzlich kann das angeformte Fixierelement als Rastelement ausgebildet sein. Hierzu kann das Fixierelement als eine Aussparung oder Auswölbung im Randbereich des Grundkörpers ausgebildet sein. Darüber hinaus ist die Kunststoffstruktur in ihrem Randbereich vorzugsweise mit Vorsprüngen versehen, die in die Kammstruktur im Randbereich des metallischen Grundkörpers einfügbar sind, insbesondere einsetzbar, einsteckbar bzw einrastbar. Mit anderen Worten: Die Vorsprünge der Kunststoffstruktur in deren Randbereich korrespondieren mit der Kammstruktur im Randbereich des metallischen Grundkörpers, so dass bei einem Übereinanderliegen beider Randbereiche ein einfaches mechanisches Positionieren und Fixieren sowie Verbinden ermöglicht ist.

Für eine möglichst sichere und hinreichend feste mechanische Verbindung der Kunststoffstruktur am metallischen Grundkörper umschließt das angeformte Fixierelement die Kunststoffstruktur im Randbereich zumindest teilweise. Insbesondere umschließt das angeformte Fixierelement die Kunststoffstruktur zumindest u-förmig. Für eine Erhöhung der Festigkeit der mechanischen Verbindung können der metallische Grundkörper und die Kunststoffstruktur im Randbereich in mehreren Stufen übereinander mechanisch verbunden sein. Beispielsweise kann das angeformte Fixierelement die Kunststoffstruktur je Stufe u-förmig umschließen. Bei einer kammartigen Ausbildung des angeformten Fixierelements umschließt, insbesondere umgreift, dieses die Kunststoffstruktur mit der Kammstruktur. Dabei weist je nach Umschließung der Kammstruktur auf der Ober- und/oder Unterseite des Randbereichs der Kunststoffstruktur diese ober- und/oder unterseitig des zugehörigen Randbereichs korrespondierende Vorsprünge auf, welche zur Fixierung, z.B. Einrasten oder Einklemmen, in der Kammstruktur geeignet sind.

Zusätzlich kann das angeformte Fixierelement mit mindestens einem Strukturelement, insbesondere mit einer Rippe, einem Steg, einem Noppen, einem Durchbruch, versehen sein. Hierdurch wird eine hinreichend gute Festigkeit, insbesondere Beul- und Knickfestigkeit, des Randbereichs des metallischen Grundkörpers sichergestellt. Zusätzlich können diese Strukturelemente die mechanische Verbindung unterstützen, indem die Oberfläche der Kunststoffstruktur im Randbereich mit den Strukturelementen des Randbereichs des metallischen Grundkörpers korrespondiert.

In einer möglichen Ausführungsform ist die Kunststoffstruktur in einen Hohlraum des metallischen Grundkörpers einsetzbar, insbesondere einfügbar. Dabei kann die Kunststoffstruktur einerseits als ein separates Modul ausgebildet sein, welches in den metallischen Grundkörper eingesetzt wird. Dazu ist die Kunststoffstruktur mittels des angeformten Fixierelements positionierbar und fixierbar. Andererseits kann die Kunststoffstruktur zumindest teilweise in Art einer Kunststoffauskleidung, z.B. angespritzt, angefügt und/oder eingefügt, sein. Beispielsweise wird hierzu die Kunststoffauskleidung in einem Verfahrensschritt in einem so genannten Ein- oder Mehrkomponenten-Spritzguss-Verfahren eingebracht und als eine Kunststoffstruktur geformt, wobei diese auch den Randbereich des metallischen Grundkörpers bedeckt.

Zweckmäßigerweise ist die Kunststoffstruktur in ihrem Randbereich mit dem metallischen Grundkörper mittels des angeformten Fixierelements formschlüssig und/oder kraftschlüssig anhand einer Bördelverbindung, Steckverbindung, Schnappverbindung, Clipsverbindung, Stemmverbindung und/oder Hakverbindung einfügbar, insbesondere einclipsbar, einquetschbar, einhakbar und/oder einsetzbar. Darüber hinaus kann die Kunststoffstruktur in ihrem Randbereich mit dem metallischen Grundkörper mittels des angeformten Fixierelements stoffschlüssig anhand einer Klebeverbindung, einer spritzgegossenen Kunststoffverbindung, Lötverbindung und/oder Schweißverbindung verbunden sein.

Zusätzlich kann die Kunststoffstruktur mit dem metallischen Grundkörper in deren Randbereiche mittels eines separaten Verbindungselements, insbesondere einer Klammer, z.B. einer u-förmigen Klammer, verbindbar sein. Beispielsweise kann die Klammer den gebördelten Randbereich des Grundkörpers, in welchem der Randbereich der Kunststoffstruktur zumindest teilweise gehalten ist, umgreifend angeordnet sein.

Je nach Art und Funktion des Bauteils kann die Kunststoffstruktur als eine Aussteifungsstruktur und/oder eine Führungsstruktur ausgebildet sein. Beispielsweise kann die Kunststoffstruktur einen Führungs- oder Strömungskanal bilden, in welchem ein Medium, z.B. Luft zur Klimatisierung eines Fahrzeuginnenraums, geführt wird. Alternativ oder zusätzlich kann die Kunststoffstruktur als ein Kabelkanal ausgebildet sein. Zusätzlich oder alternativ kann die Kunststoffstruktur zumindest teilweise als eine Innenverrippung zur Aussteifung des metallischen Grundkörpers ausgebildet sein. Auch kann die Kunststoffstruktur ein Kombinationselement aus einer Innenverrippung und eines Kanals sein. In einer weiteren Ausführungsform kann die Kunststoffstruktur ein- oder mehrteilig ausgebildet sein. Beispielsweise kann die Kunststoffstruktur einen Kanal im Hohlraum des metallischen Grundkörpers bilden und im nach oben offenen Bereich des Hohlraums, z.B. im Öffnungsbereich einer Halbschale, des metallischen Grundkörpers als ein gerippter Deckel ausgeführt sein, welcher den offenen Bereich möglichst gut aussteift.

Zweckmäßigerweise ist die Kunststoffstruktur aus einem thermoplastischen Kunststoff, insbesondere aus einem faserverstärkten und/oder gefüllten Kunststoff, gebildet. Der metallische Grundkörper ist bevorzugt aus einem Leichtmetall, insbesondere Aluminium, Magnesium oder Titan, oder aus Feinstahl gebildet und weist eine Wanddicke von 0,4 mm bis 3 mm, insbesondere von 0,4 mm bis 1,5 mm auf. Je nach Funktion und Art des Bauteils, z.B. als Querträger im Fahrzeug oder als Luftführungskanal, ist der metallische Grundkörper als ein Hohlprofil, insbesondere als ein offenes Hohlprofil, mit einem entlang der Längsachse des Hohlprofil ein- oder beidseitig verlaufenden Rand, z.B. als ein Hut-Profil, ausgeführt.

Vorteilhafterweise kann der teilweise mit Kunststoff versehene Grundkörper zumindest bereichsweise perforiert ausgebildet sein. Zweckmäßigerweise erfolgt dies beispielsweise in einem Öffnungsbereich. Ein derartiger Grundkörper hat insbesondere den Vorteil Gewicht zu sparen und/oder die Struktur zu verstärken.

Bevorzugt wird das beschriebene Bauteil als Instrumententafelträger in einem Fahrzeug verwendet, wobei der Kunststoffkem oder die Kunststoffstruktur einen oder mehrere Kanäle, insbesondere einen Luftführungskanal und/oder einen Kabelkanal, bildet. Alternativ kann ein derartiges Bauteil als Querträger in einem Fahrzeug, insbesondere als Querträger zwischen den A-Säulen eines Fahrzeugs oder als ein Front-End-Bauteil, verwendet werden. Auch ist die Verwendung eines derartigen Bauteils als Trägerelement in einem Fahrzeug, insbesondere als A-, B-, C-, D-Säulenträgerelement, als Längsträger, als Fahrzeugschweller, als Dachholm, möglich.

Beim Verfahren zur Herstellung des beschriebenen Bauteils wird beispielsweise ein bereits vorgefertigter metallischer Grundkörper verwendet, der in seinem Randbereich mit einem angeformten Fixierelement versehen ist. In dem vorgefertigten metallischen Grundkörper wird eine im Hohlraum des metallischen Grundkörpers aufzunehmende Kunststoffstruktur positioniert und fixiert, wobei das angeformte Fixierelement des metallischen Grundkörpers umgeformt wird, so dass die Kunststoffstruktur in ihrem Randbereich mit dem metallischen Grundkörper zumindest mechanisch kammartig verbunden, insbesondere gebördelt, ist. In einer möglichen Ausführungsform wird das Fixierelement im Randbereich des metallischen Grundkörpers zumindest u-förmig um den Randbereich der Kunststoffstruktur gebogen.

Insbesondere werden die miteinander verbundenen Randbereiche des metallischen Grundkörpers und der Kunststoffstruktur formschlüssig, kraftschlüssig und/oder stoffschlüssig miteinander verbunden, beispielsweise werden sie gebördelt, gepresst, gestanzt, genietet, geschraubt, geschweißt, gelötet und/oder geklebt. Zusätzlich können die mechanisch miteinander verbundenen Randbereiche des metallischen Grundkörpers und der Kunststoffstruktur mittels eines separaten Verbindungselements, insbesondere einer Klammer, einem Clip, einer Schraube, miteinander verbunden werden.

Je nach Aufbau und Funktion des Bauteils kann der metallische Grundkörper mit einem das Fixierelement bildenden Rand versehen sein und als vorgefertigtes Modul verwendet werden. Alternativ kann der metallische Grundkörper selbst beim mechanischen Verbinden der Randbereiche geformt werden, wobei der Grundkörper dazu in einem Umformwerkzeug angeordnet ist. Auch kann die Kunststoffstruktur als ein vorgefertigtes Modul, insbesondere als ein einteiliges oder mehrteiliges Modul, verwendet werden. Alternativ kann die Kunststoffstruktur in einen vorgefertigten metallischen Grundkörper durch Kunststoffeinbringen in einem so genannten Ein- oder Mehrkomponenten-Spritzgussverfahren eingebracht und als eine Kunststoffstruktur geformt werden. Beispielsweise wird die Kunststoffstruktur durch Spritzgießen, Spritzprägen, Verpressen von Langglasfaser verstärkten Plastifikaten mit oder ohne Fasermattenverstärken hergestellt.

Die mit der Erfindung erzielten Vorteile bestehen insbesondere darin, dass ein Bauteil mit einer hohen gestalterischen Freiheit hergestellt werden kann. Dabei kann der metallische Grundkörper mit der Kunststoffstruktur ohne Zusatzteile weitgehend großflächig im Randbereich verbunden werden. Darüber hinaus kann für die Kunststoffstruktur als Material ein Langglasfaser-Material verwendet werden, welches die Steifigkeit und Festigkeit des Bauteils erhöht. Darüber hinaus ist durch die großflächige Verbindung von Grundkörper und Kunststoffstruktur eine flächenförmige oder linienförmige Kraftübertragung zwischen den Bauteilen möglich. Zusätzlich kann durch die großflächige Verbindungsstelle diese für weitere Verbindungsarten, wie stoffschlüssige Verbindungen, z.B. Kleben, verwendet werden.

Ausführungsbeispiele der Erfindung werden anhand einer Zeichnung näher erläutert. Darin zeigen:
- Figuren 1A, 1B: schematisch im Querschnitt eine nicht erfindungsgemäße Ausführungsform für ein Bauteil mit einem metallischen Grundkörper und einer Kunststoffstruktur, die in deren Randbereichen mechanisch verbunden sind,
- Figuren 2A bis 2C: schematisch den Fertigungsablauf für ein Herstellen der mechanischen Verbindung von metallischen Grundkörper und Kunststoffstruktur,
- Figuren 3A bis 4B: schematisch im Querschnitt verschiedene nicht erfindungsgemäße Ausführungsformen eines Bauteils mit verschiedenartigen Verbindungen von metallischen Grundkörper und Kunststoffstruktur,
- Figuren 5A, 5B: schematisch in perspektivischer Darstellung ein Bauteil mit einem Grundkörper mit einem kammartigen angeformten Fixierelement im Randbereich, und
- Figuren 6A bis: 7 schematisch in perspektivischer Darstellung weitere Ausführungsformen für ein Bauteil mit verschiedenartigen Fixierelementen im Randbereich des Grundkörpers.

Einander entsprechende Teile sind in allen Figuren mit den gleichen Bezugszeichen versehen.

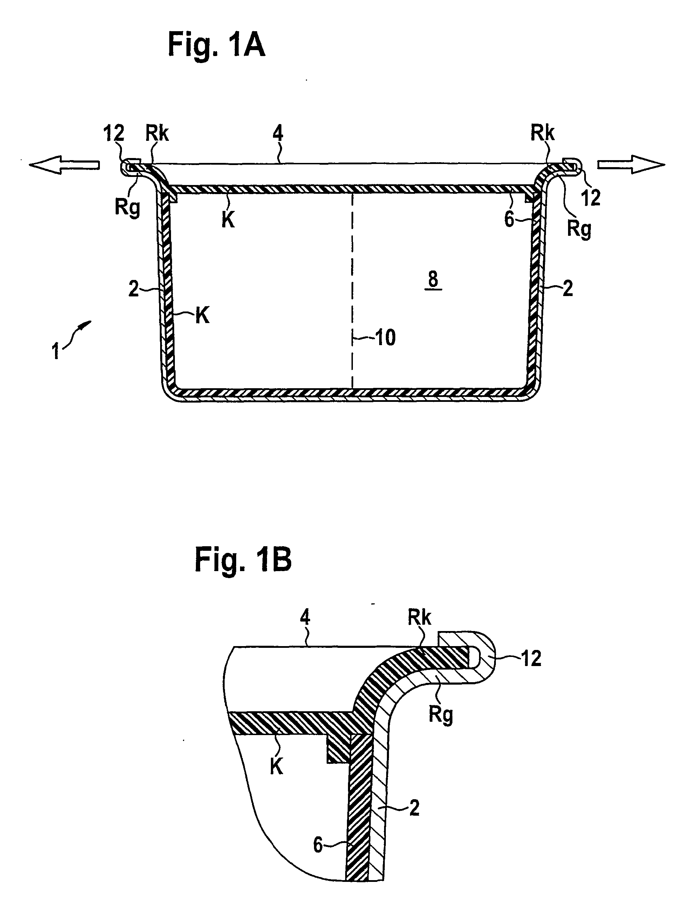

Figur 1A zeigt im Querschnitt ein Bauteil 1, z.B. einen Querträger zum Anordnen zwischen nicht näher dargestellten A-Säulen eines nicht näher dargestellten Fahrzeugs.

Das Bauteil 1 ist insbesondere ein Hybridbauteil. Dazu weist das Bauteil 1 einen metallischen Grundkörper 2 auf, der bevorzugt aus Blech, insbesondere aus einem Leichtmetall-Blech, z.B. aus Aluminium-Blech oder Magnesium-Blech oder aus Feinstahl-Blech, mit einer Wanddicke von 0,4 mm bis 3 mm, insbesondere von 0,4 mm bis 1,5 mm oder 2,0 mm gebildet ist. Darüber hinaus kann der Grundkörper 2 mit bereichsweise variierender Dicke geformt sein, so dass an das Bauteil 1 abschnittsweise weitere Elemente, z.B. eine Lenkung oder eine Klimaanlage oder Luftein- und/oder Luftauslässe, integriert werden können.

Der Grundkörper 2 ist im Ausführungsbeispiel als ein Hohlprofil, insbesondere als ein U-Profil oder Kastenprofil, ausgeführt. Dabei weist der Grundkörper 2 im nach oben offenen Bereich des U-Profils oder der Halbschale eine Auskragung oder einen Randbereich Rg auf, der entlang der Längsachse des Grundkörpers 2 verläuft. Daher kann der Grundkörper 2 auch als ein Hutprofil bezeichnet werden. Alternativ kann der metallische Grundkörper auch rohrartig, z.B. als ein Hohlzylinder ausgebildet sein. In dieser nicht näher dargestellten Ausführungsform ist der Grundkörper 2 aus zwei Elementen gebildet, die im übereinander liegenden Bereich mit Randbereichen versehen sind. Auch kann der kastenförmige oder u-förmige Grundkörper 2 aus zwei Elementen bestehen. Dies ist insbesondere von der Verwendung des Bauteils 1 abhängig. Beispielsweise kann der Öffnungsbereich O des nach oben hin offenen Grundkörpers 2 mit einem Deckel 4 versehen sein, der je nach Funktion und Art des Bauteils 1 aus Kunststoff oder Metall, insbesondere einem Leichtmetall, gebildet ist.

Der Grundkörper 2 ist innenseitig mit Kunststoff K versehen, der eine Kunststoffstruktur 6 bildet. Der Kunststoff K kann dabei in Art einer Kunststoffauskleidung angefügt, eingefügt oder angespritzt sein. Der zumindest teilweise mit Kunststoff K ausgekleidete Grundkörper 2 dient im geschlossenen Zustand als Kanal 8, insbesondere als ein Strömungs- und/oder Führungskanal zum Führen einer Strömung bzw. zum Führen von Kabeln oder anderen Komponenten. Je nach Aufbau der Kunststoffstruktur 6 kann der Kanal 8 als ein Einkammerkanal oder ein Mehrkammerkanal ausgebildet sein. Bei einem Mehrkammerkanal weist die Kunststoffstruktur 6 zusätzlich eine Trennwand 10 (gestrichelt dargestellt) auf. Die Kunststoffstruktur 6 dient insbesondere der Aussteifung des beispielsweise aus Leichtmetall geformten Grundkörpers 2, um eine Verformung des Grundkörpers 2 bei Kraftbeanspruchung zu verhindern.

Für eine möglichst gute Nutzung des mittels der Kunststoffstruktur 6 gebildeten Kanals 8 zur Führung eines Mediums, z.B. von Luft zur Klimatisierung eines Fahrzeuginnenraums oder von Leitungen oder Kabeln, und zur Reduzierung der daraus resultierenden mechanischen Beanspruchung des Bauteils 1, insbesondere Kraftbeanspruchung der Verbindung von Grundkörper 2 und Kunststoffstruktur 6 sind diese hinreichend fest miteinander zu verbinden. Dazu fügt sich die Kunststoffstruktur 6 mit ihrem zugehörigen Randbereich Rk an den Randbereich Rg des Grundkörpers 2 an. Der Randbereich Rg des Grundkörpers 2 ist mit angeformten Fixierelementen 12 versehen, anhand dessen die Kunststoffstruktur 6 zumindest mechanisch gefügt, insbesondere gebördelt, ist. Dabei erfolgt die mechanische Verbindung des metallischen Grundkörpers 2 und der Kunststoffstruktur 6 an deren übereinander liegenden Rändern Rg bzw. Rk derart mechanisch, dass das angeformte Fixierelement 12 um den Randbereich Rk der Kunststoffstruktur 6 gebogen, insbesondere gebördelt, wird. In der einfachen Ausführungsform der großflächigen Verbindung des metallischen Grundkörpers 2 mit der Kunststoffstruktur 6 in deren Randbereichen Rg bzw. Rk umschließt das angeformte Fixierelement 12 den Randbereich Rk der Kunststoffstruktur 6 u-förmig, wie dies in der Figur 1B im vergrößerten Ausschnitt gemäß Figur 1A näher dargestellt ist.

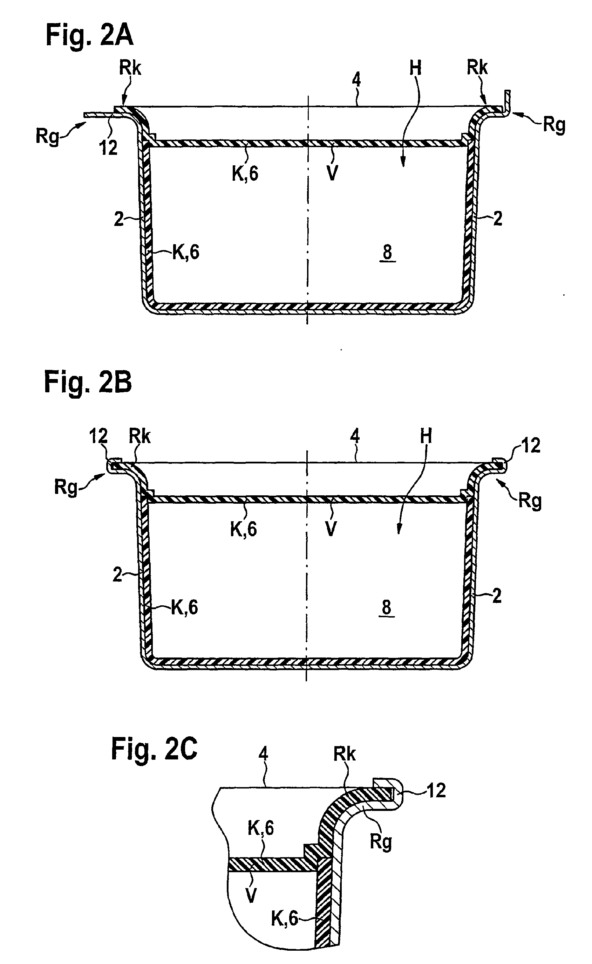

Die Figuren 2A bis 2C zeigen schematisch den Fertigungsablauf für ein Herstellen der mechanischen Verbindung von metallischem Grundkörper 2 und Kunststoffstruktur 6. Dabei wird, wie in Figur 2A dargestellt, die Kunststoffstruktur 6 in einen Hohlraum H, der beispielsweise als Kanal 8 dient, des Grundkörpers 2 eingesetzt, insbesondere eingefügt. Gegebenenfalls wird die Kunststoffstruktur 6 über das Fixierelement 12 im Hohlraum H positioniert und vorfixiert. Für eine flächenmäßige und formschlüssige Verbindung des Grundkörpers 2 mit der Kunststoffstruktur 6 in den übereinander liegenden Randbereichen Rg bzw. Rk wird das jeweilige Fixierelement 12 umgeformt, insbesondere umgebogen, so dass das Fixierelement 12 den Randbereich Rk der Kunststoffstruktur 6 umschließt, insbesondere u-förmig, umschließt, wie in Figur 2B und in Figur 2C im vergrößerten Ausschnitt dargestellt.

Je nach Bauteilart kann sowohl der metallische Grundkörper 2 als auch die Kunststoffstruktur 6 als vorgefertigte Module ausgebildet sein, die ineinander gefügt, insbesondere gesetzt, werden und deren Randbereiche Rg bzw. Rk mittels des Fixierelements 12 miteinander verbunden, insbesondere gebördelt werden. Alternativ kann die Kunststoffstruktur 6 aus mehreren Elementen gebildet sein, wobei ein Element die Kunststoffauskleidung des Hohlraums H repräsentiert. Das andere Element ist als Versteifungsstruktur V in Form einer Innenverrippung im Öffnungsbereich des Grundkörpers 2 unterhalb des Deckels 4 als Kunststoffstruktur 6 angeordnet. Die Kunststoffschicht oder -auskleidung bzw. die Versteifungsstruktur weist unabhängig von der Art und Weise der Auskleidung - in eingespritzter oder angefügter Form - je nach Vorgabe eine Dicke von 1 mm bis 10 mm auf, vorzugsweise zwischen 0,8 mm und 6 mm. Der Grundkörper 2 kann innen- und/oder außenseitig mit Kunststoff K versehen sein. Darüber hinaus kann durch Einbringen von Kunststoff in mehreren Phasen dieser ein- oder mehrschichtig an den Grundkörper 2 angeformt sein.

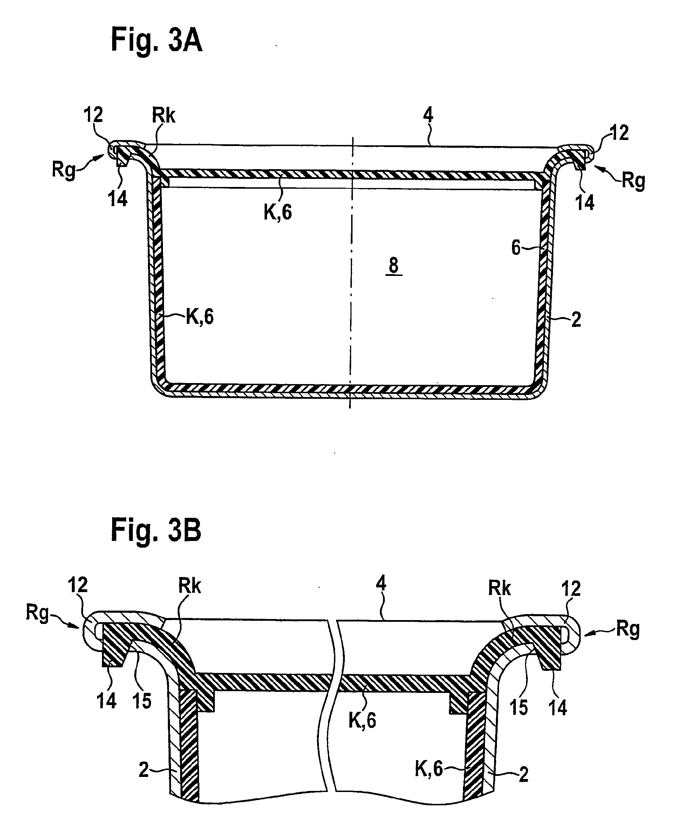

Die Figuren 3A bis 4B zeigen schematisch im Querschnitt verschiedene Ausführungsformen eines Bauteils 1 mit verschiedenartigen Verbindungen von metallischem Grundkörper 2 und Kunststoffstruktur 6 in deren Randbereichen Rg bzw. Rk.

Die Figuren 3A und 3B (vergrößerter Ausschnitt aus Figur 3A) zeigen zusätzlich zu der gebördelten Verbindung der Randbereiche Rg und Rk eine weitere Verbindung, indem der Randbereich Rk der Kunststoffstruktur 6 mit einem Vorsprung 14, z.B. einer Kunststoffnase, versehen ist, welche in eine Ausnehmung 15 im Fixierelement 12 und den Randbereich Rg des Grundkörpers 2 eingreift, so dass eine Fixierung möglich ist.

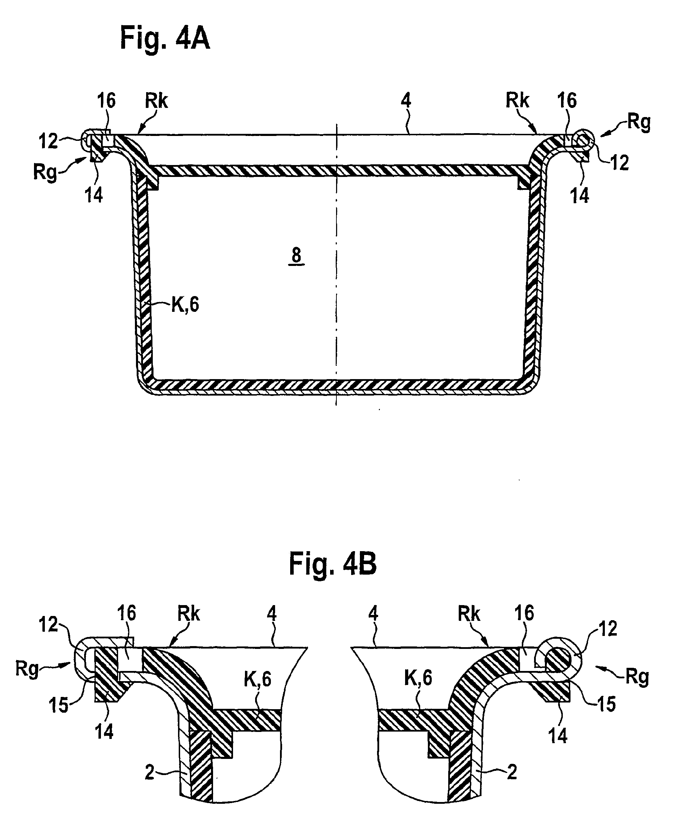

Die Figuren 4A und 4B (vergrößerter Ausschnitt aus Figur 4A) zeigen eine weitere Ausgestaltung der Verbindung von Grundkörper 2 und Kunststoffstruktur 6. Dabei weist die Kunststoffstruktur 6 in ihrem Randbereich Rk eine Aussparung 16 auf, in welche das Fixierelement 12 hingebogen wird und somit einrastet (siehe rechte Randbereiche Rg, Rk). Wie in Figuren 3A und 3B gezeigt, kann auch hier der Vorsprung 14 des Randbereichs Rk der Kunststoffstruktur in eine Ausnehmung 15 des Randbereichs Rg des Grundkörpers 2 einrasten.

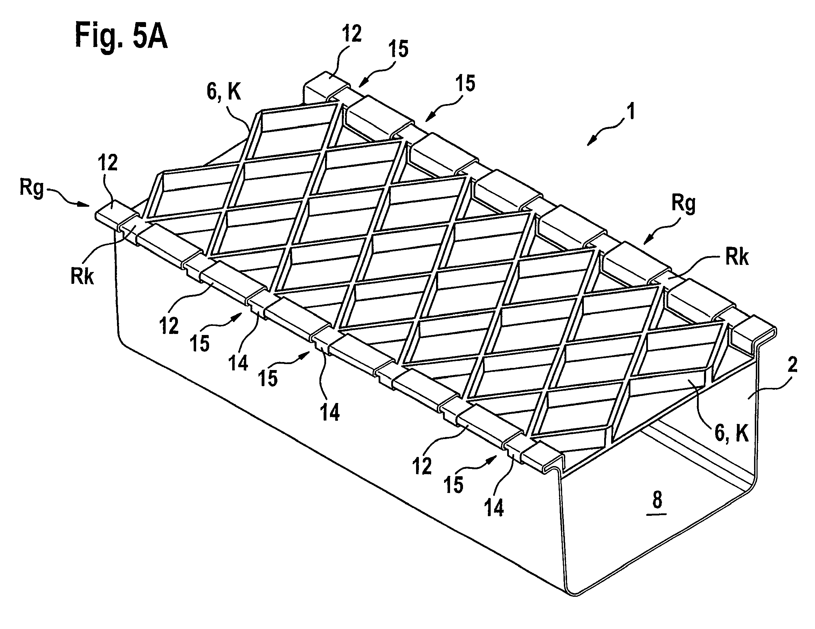

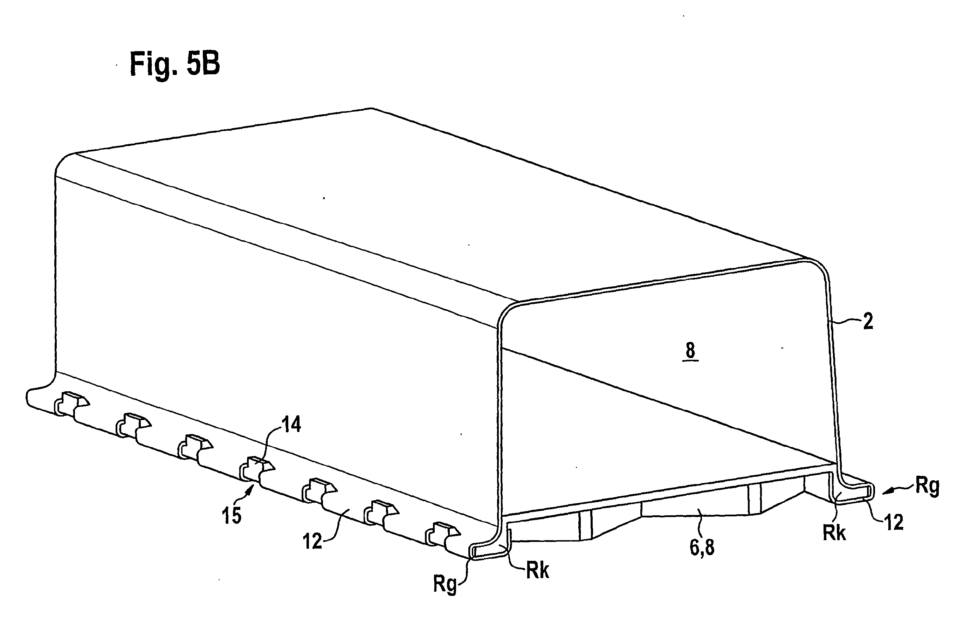

Die Figuren 5A, 5B zeigen schematisch in perspektivischer Darstellung ein Bauteil 1 mit einem Grundkörper 2 mit einem kammartigen angeformten Fixierelement 12 im Randbereich Rg. Die Kammstruktur des Randbereichs Rg und somit das kammartige Fixierelement 12 wird um den Randbereich Rk der Kunststoffstruktur 6, welche hier lediglich als Aussteifungsstruktur dargestellt ist, gebogen, insbesondere gebördelt. Zusätzlich kann die Kunststoffstruktur 6 wiederum mit Vorsprüngen 14 versehen sein, die in die durch die Kammstruktur des Fixierelements 12 gebildeten Ausnehmungen 15 eingreifen, z.B. einclipst, einrastet, einklemmt.

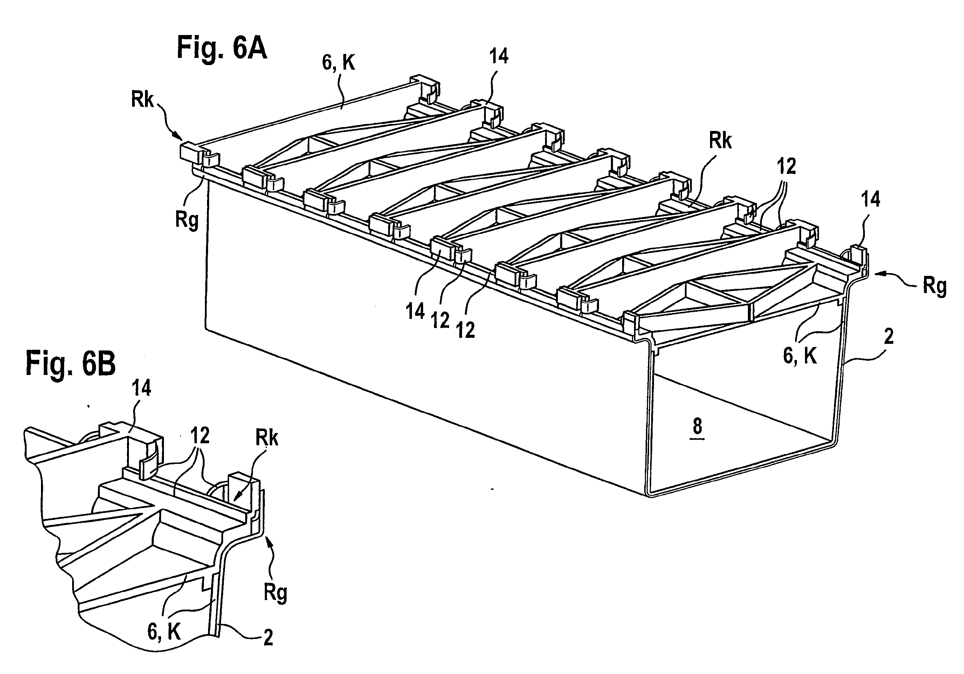

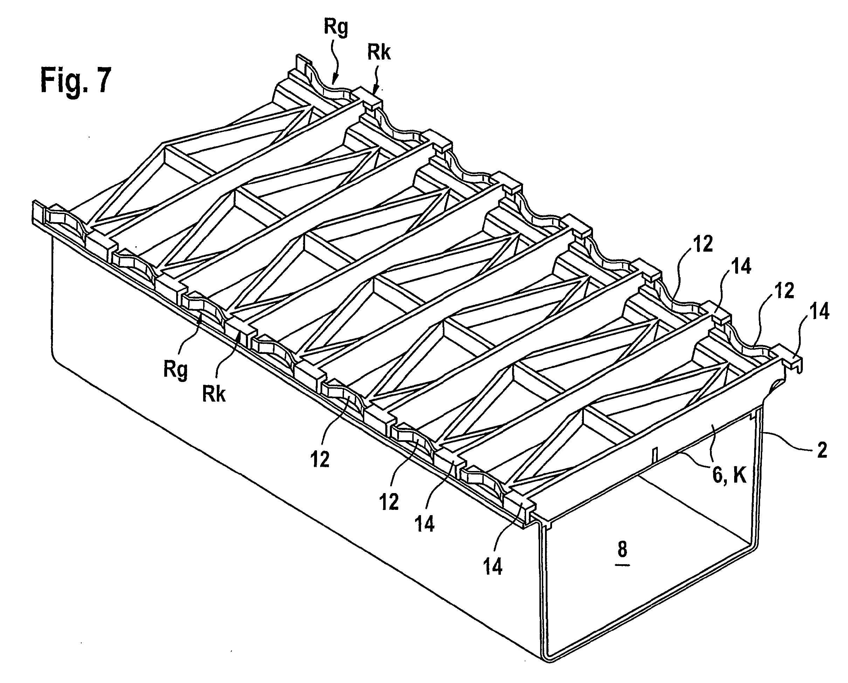

Die Figuren 6A und 6B zeigen schematisch in perspektivischer Darstellung eine weitere Ausführungsform für ein Bauteil 1 mit einem verschiedenartigen Fixierelement 12 im Randbereich Rg des Grundkörpers 2. Dabei ist das Fixierelement 12 als Rastelement ausgebildet, in welches Vorsprünge 14 des Randbereichs Rk der Kunststoffstruktur 6 eingreifen, insbesondere einrasten, einklemmen oder einclipsen. Die Figur 7 zeigt eine weitere Ausführungsform für ein Fixierelement 12 mit Rastfunktion.

Zusätzlich kann das Fixierelement 12 im Randbereich Rg des Grundkörpers 2 mit Rippen, Stegen, Noppen oder und/oder Durchbrüchen versehen sein (nicht näher dargestellt). Dabei ist dann die Kunststoffstruktur 6 in ihrem Randbereich Rk durch Spritzdruck geformt und mit einer korrespondierenden Oberflächenstruktur versehen. Je nach Form, Art und Anzahl der Fixierelemente 12 können beliebige Formen und Muster, z. B. Längsrillen, Querrillen, Kreuzmuster oder hexagonale Muster, als fixierende Oberflächenstruktur für die Kunststoffstruktur 6 im Randbereich Rk realisiert werden, die mit der Struktur des Fixierelements 12 korrespondieren.

Zusätzlich kann die Kunststoffstruktur 6 in ihrem Randbereich Rk mit dem metallischen Grundkörper 2 stoffschlüssig anhand einer Klebverbindung, einer spritzgegossenen Kunststoffverbindung, Lötverbindung und/oder Schweißverbindung verbunden sein. Dies ist bei allen oben beschriebenen Ausführungsformen eines Bauteils 1 möglich. Auch können die Kunststoffstruktur 6 und der metallische Grundkörper 2 in ihren Randbereichen Rg, Rk mittels eines separaten Verbindungselements, insbesondere einer Klammer, z.B. einer u-förmigen Klammer, verbunden werden.

Das Bauteil 1 dient beispielsweise als Instrumententafelträger für eine Klima- und/oder Heizungsanlage. Alternativ kann das Bauteil 1 als ein unter einer Windschutzscheibe angeordneter Querträger in einem Fahrzeug dienen, welcher als Luftführungskanal zur Klimatisierung des Fahrzeuginnenraums und zur Enteisung der Windschutz- oder Frontscheibe vorgesehen ist. Der Grundkörper 2 ist mit mehreren in Längsrichtung gesehen in Abstand zueinander angeordneten Öffnungsbereichen zum Ein- und/oder Austritt eines im Kanal 8 geführten Mediums, z. B. Luft, versehen.

Im Weiteren kann ein solches Bauteil 1 auch an anderen Stellen in einem Fahrzeug eingesetzt werden. Beispiele sind A-, B-, C-, D-Säulen, Längsträger, Fahrzeugschweller, Dachholme, etc. Auch durch diese Bauteile 1 kann Luft einer Klimaanlage (kurz HVAC genannt) Platz sparend geführt und verteilt werden, wobei das Bauteil 1 als Strukturteil im Fahrzeug, insbesondere als Hohlstrukturteil, ausgeführt ist.

### Bezugszeichenliste

- 1: Bauteil
- 2: Grundkörper
- 4: Deckel
- 6: Kunststoffstruktur
- 8: Kanal
- 10: Trennwand
- 12: angeformtes Fixierelement
- 14: Vorsprung
- 15: Ausnehmung
- 16: Aussparung

- H: Hohlraum
- K: Kunststoff
- Rg: Randbereich des Grundkörpers
- Rk: Randbereich der Kunststoffstruktur

## Patentansprüche

1. Bauteil (1), insbesondere Hybridbauteil für einen Querträger eines Fahrzeugs, umfassend einen metallischen Grundkörper (2), der zumindest teilweise mit einer Kunststoffstruktur (6) versehen ist, wobei der metallische Grundkörper (2) an seinem Randbereich (Rg) ein angeformtes Fixierelement (12) aufweist, anhand dessen die Kunststoffstruktur (6) mit dem Grundkörper (2) zumindest mechanisch gefügt ist, **dadurch gekennzeichnet, dass** das angeformte Fixierelement (12) bei dem als Hohlprofil ausgebildeten metallischen Grundkörper (2) durch einen in Längsachse verlaufenden Rand (Rg) des Grundkörpers selbst gebildet ist, der eine Kammstruktur aufweist.

2. Bauteil nach Anspruch 1, bei dem das angeformte Fixierelement (12) als Rastelement ausgebildet ist.

3. Bauteil nach einem der Ansprüche 1 bis 2, bei dem die Kunststoffstruktur (6) in ihrem Randbereich (Rk) mit Vorsprüngen (14) versehen ist, die in die Kammstruktur des metallischen Grundkörpers (2) einfügbar sind, insbesondere einsetzbar, einsteckbar bzw. einrastbar.

4. Bauteil nach einem der Ansprüche 1 bis 3, bei dem das angeformte Fixierelement (12) die Kunststoffstruktur (6) in deren Randbereich (Rk) zumindest teilweise umschließt.

5. Bauteil nach einem der Ansprüche 1 bis 4, bei dem das angeformte Fixierelement (12) die Kunststoffstruktur (6) zumindest u-förmig umschließt.

6. Bauteil nach einem der Ansprüche 1 bis 5, bei dem das angeformte Fixierelement (12) die Kunststoffstruktur (6) in deren Randbereich (Rk) kammartig umschließt, insbesondere umgreift.

7. Bauteil nach einem der Ansprüche 1 bis 6, bei dem das angeformte Fixierelement (12) mit mindestens einem Strukturelement, insbesondere mit einer Rippe, einem Steg, einem Noppen, einem Durchbruch, versehen ist.

8. Bauteil nach einem der Ansprüche 1 bis 7, bei dem die Kunststoffstruktur (6) in einen Hohlraum (H) des metallischen Grundkörpers (2) einsetzbar, insbesondere einfügbar, ist und mittels des angeformten Fixierelements (12) positionierbar und fixierbar ist.

9. Bauteil nach einem der Ansprüche 1 bis 8, bei dem die Kunststoffstruktur (6) in ihrem Randbereich (Rk) mit dem metallischen Grundkörper (2) mittels des angeformten Fixierelements (12) formschlüssig und/oder kraftschlüssig anhand einer Bördelverbindung, Steckverbindung, Schnappverbindung, Clipsverbindung, Stemmverbindung und/oder Hakverbindung einfügbar, insbesondere einclipsbar, einquetschbar, einhakbar und/oder einsetzbar, ist.

10. Bauteil nach einem der Ansprüche 1 bis 9, bei dem die Kunststoffstruktur (6) in ihrem Randbereich (Rk) mit dem metallischen Grundkörper (2) zusätzlich stoffschlüssig anhand einer Klebverbindung, einer spritzgegossenen Kunststoffverbindung, Lötverbindung und/oder Schweißverbindung verbunden ist.

11. Bauteil nach einem der Ansprüche 1 bis 10, bei dem die Kunststoffstruktur (6) mit dem metallischen Grundkörper (2) in deren Randbereiche (Rg, Rk) zusätzlich mittels eines separaten Verbindungselements, insbesondere einer Klammer, z.B. einer u-förmigen Klammer, verbindbar ist.

12. Bauteil nach einem der Ansprüche 1 bis 11, bei dem die Kunststoffstruktur (6) als eine Aussteifungsstruktur und/oder eine Führungsstruktur ausgebildet ist.

13. Bauteil nach einem der Ansprüche 1 bis 12, bei dem die Kunststoffstruktur (6) ein- oder mehrteilig ausgebildet ist.

14. Bauteil nach einem der Ansprüche 1 bis 13, bei dem die Kunststoffstruktur (6) aus einem thermoplastischen Kunststoff, insbesondere aus einem faserverstärkten und/oder gefüllten Kunststoff, gebildet ist.

15. Bauteil nach einem der Ansprüche 1 bis 14, bei dem der metallische Grundkörper (2) aus einem Leichtmetall, insbesondere Aluminium, Magnesium oder Titan, oder aus Feinstahl gebildet ist und eine Wanddicke von 0,4 mm bis 1,5 mm aufweist.

16. Bauteil nach einem der Ansprüche 1 bis 15, bei dem der metallische Grundkörper (2) als ein Hohlprofil, insbesondere als ein offenes Hohlprofil mit einem entlang der Längsachse des Hohlprofils ein- oder beidseitig verlaufenden Rand (Rg), z.B. als ein Hut-Profil, ausgeführt ist.

17. Verwendung eines Bauteils (1) nach einem der Ansprüche 1 bis 16 als Instrumententafelträger in einem Fahrzeug, mit einem Kanal (8), insbesondere einem Luftführungskanal und/oder einem Kabelkanal.

18. Verwendung eines Bauteils (1) nach einem der Ansprüche 1 bis 16 als Trägerelement in einem Fahrzeug, insbesondere als A-, B-, C-, D-Säulenträgerelement, als Längsträger, als Fahrzeugschweller, als Dachholm, als Querträger in einem Fahrzeug, insbesondere als Querträger zwischen den A-Säulen eines Fahrzeugs oder als ein Front-End-Bauteil.

19. Verfahren zur Herstellung eines Bauteils (1) nach einem der Ansprüche 1 bis 16, bei dem ein metallischer Grundkörper (2) in seinem Randbereich (Rg) mit einer Kammstruktur als angeformtes Fixierelement (12) versehen wird, in welches eine in einen Hohlraum (H) des metallischen Grundkörpers (2) aufzunehmende Kunststoffstruktur (6) positioniert und fixiert wird, wobei das angeformte Fixierelement (12) des metallischen Grundkörpers (2) umgeformt wird, so dass die Kunststoffstruktur (6) in ihrem Randbereich (Rk) mit dem metallischen Grundkörper (2) zumindest mechanisch kammartig verbunden ist.

20. Verfahren nach Anspruch 19, bei dem das Fixierelement (12) zumindest u-förmig um den Randbereich (Rk) der Kunststoffstruktur (6) gebogen wird.

21. Verfahren nach Anspruch 19 oder 20, bei dem die miteinander verbundenen Randbereiche (Rg, Rk) des metallischen Grundkörpers und der Kunststoffstruktur (6) formschlüssig, kraftschlüssig und/oder stoffschlüssig miteinander verbunden werden, insbesondere gebördelt, gepresst, gestanzt, genietet, geschraubt, geschweißt, gelötet und/oder geklebt werden.

22. Verfahren nach einem der Ansprüche 19 bis 21, bei dem die miteinander verbundenen Randbereiche (Rg, Rk) des metallischen Grundkörpers (2) und der Kunststoflstruktur (6) mittels eines separaten Verbindungselements, insbesondere einer Klammer, einem Clip, einer Schraube, zusätzlich miteinander verbunden werden.

23. Verfahren nach einem der Ansprüche 19 bis 22, bei dem der metallische Grundkörper (2) mit einem das Fixierelement (12) bildenden Rand (Rg) versehen ist und als vorgefertigtes Modul verwendet wird.

24. verfahren nach einem der Ansprüche 19 bis 23, bei dem die Kunststoffstruktur (6) als ein vorgefertigtes Modul, insbesondere als ein einteiliges oder mehrteiliges Modul, verwendet wird.

## Claims

1. Component (1), in particular hybrid component, for a crossmember of a vehicle, comprising a metal base body (2) at least partially provided with a plastic structure (6), the metal base body (2) having in its edge region (Rg) an integral fixing element (12) by means of which the plastic structure (6) is at least mechanically joined to the base body (2), **characterised in that** the integral fixing element (12) is, in a metal base body (2) designed as a hollow profile, represented by an edge (Rg) of the base body itself, which extends along the longitudinal axis and has a comb structure.

2. Component according to claim 1, wherein the integral fixing element (12) is designed as a latching element.

3. Component according to claim 1 or 2, wherein the plastic structure (6) is provided in its edge region (Rk) with projections (14) which can be fitted, in particular inserted, plugged or latched into the comb structure of the metal base body (2).

4. Component according to any of claims 1 to 3, wherein the integral plastic element (6) at least partially surrounds the plastic structure (6) in the edge region (Rk) thereof.

5. Component according to any of claims 1 to 4, wherein the integral fixing element (12) surrounds the plastic structure (6) at least in a U-shaped manner.

6. Component according to any of claims 1 to 5, wherein the integral fixing element (12) surrounds, in particular encompasses, the plastic structure (6) in the manner of a comb in the edge region (Rk) thereof.

7. Component according to any of claims 1 to 6, wherein the integral fixing element (12) is provided with at least one structural element, in particular with a rib, web, knob or aperture.

8. Component according to any of claims 1 to 7, wherein the plastic structure (6) can be inserted, in particular fitted, into a cavity (H) of the metal base body (2) and can be positioned and fixed by means of the integral fixing element (12).

9. Component according to any of claims 1 to 8, wherein the plastic structure (6) can be fitted, in particular clipped, squeezed, hooked and/or inserted positively and/or non-positively with the aid of a flange connection, a plug connection, a snap connection, a clip connection, a caulked connection and/or a hook connection in its edge region (Rk) into the metal base body (2) by means of the integral fixing element (12).

10. Component according to any of claims 1 to 9, wherein the plastic structure (6) is additionally joined positively in its edge region (Rk) to the metallic base body (2) with the aid of an adhesive bond, an injection moulded plastic connection, a soldered connection and/or a welded connection.

11. Component according to any of claims 1 to 10, wherein the plastic structure (6) can additionally be joined to the metal base body (2) in the edge regions (Rg, Rk) thereof by means of a separate connecting element, in particular a clasp, for example a U-shaped clasp.

12. Component according to any of claims 1 to 11, wherein the plastic structure (6) is designed as a stiffening and/or guide structure.

13. Component according to any of claims 1 to 12, wherein the plastic structure (6) is a single- or multiple-part design.

14. Component according to any of claims I to 13, wherein the plastic structure (6) is made of a thermoplastic, in particular of a fibre-reinforced and/or filled, plastic.

15. Component according to any of claims 1 to 14, wherein the metal base body (2) is made of a light metal, in particular aluminium, magnesium, titanium, or of refined steel, and has a wall thickness of 0.4 mm to 1.5 mm.

16. Component according to any of claims 1 to 15, wherein the metal base body (2) is designed as a hollow profile, in particular as an open hollow profile with an edge (Rg) extending along the longitudinal axis of the hollow profile on one or both sides, for example as a hat profile.

17. Use of a component (1) according to any of claims 1 to 16 as a dashboard support in a vehicle, with a duct (8), in particular an air duct and/or cable duct.

18. Use of a component (1) according to any of claims 1 to 16 as a support element in a vehicle, in particular as an A-, B-, C-, D-pillar support element, as a side member, door sill, roof rail or crossmember in a vehicle, in particular as a crossmember between the A-pillars of a vehicle or as a front end component.

19. Method for producing a component (1) according to any of claims 1 to 16, wherein a metal base body (2) is provided in its edge region (Rg) with a comb structure acting as an integral fixing element (12), in which a plastic structure (6) to be accommodated in a cavity (H) of the metal base body (2) is positioned and fixed, the integral fixing element (12) of the metal base body (2) being reshaped such that the plastic structure (6) is joined at least mechanically in its edge region (Rk) to the metal base body (2) in the manner of a comb.

20. Method according to claim 19, wherein the fixing element (12) is bent at least in a U-shaped manner about the edge region (Rk) of the plastic structure (6).

21. Method according to claim 19 or 20, wherein the joined edge regions (Rg, Rk) of the metal base body (2) and the plastic structure (6) are joined positively, non-positively and/or by adhesive force, in particular flanged, pressed, stamped, riveted, bolted, welded, soldered and/or bonded.

22. Method according to any of claims 19 to 21, wherein the joined edge regions (Rg, Rk) of the metal base body (2) and the plastic structure (6) are additionally joined by means of a separate connecting element, in particular a clasp, a clip or a screw.

23. Method according to any of claims 19 to 22, wherein the metal base body (2) is provided with an edge (Rg) forming the fixing element (12) and is used as a prefabricated module.

24. Method according to any of claims 19 to 23, wherein the plastic structure (6) is used as a prefabricated module, in particular as a single- or multiple-part module.

## Revendications

1. Pièce de structure (1), en particulier pièce de structure hybride pour une traverse d'un véhicule, comprenant un corps de base métallique (2) qui est doté, au moins partiellement, d'une structure en matière plastique (6), où le corps de base métallique (2) présente, au niveau de sa zone de bordure (Rg), un élément de fixation formé (12) à l'aide duquel la structure en matière plastique (6) est assemblée, au moins mécaniquement, avec le corps de base (2), **caractérisée en ce que** l'élément de fixation formé (12), dans le cas du corps de base métallique (2) configuré comme un profilé creux, est formé lui-même par un bord (Rg) du corps de base, s'étendant suivant un axe longitudinal, corps de base qui présente une structure en forme de peigne.

2. Pièce de structure selon la revendication 1, dans laquelle l'élément de fixation formé (12) est configuré comme un élément à encliquetage.

3. Pièce de structure selon l'une ou l'autre des revendications 1 et 2, dans laquelle la structure en matière plastique (6) est dotée, dans sa zone de bordure (Rk), de parties saillantes (14) qui peuvent être introduites, en particulier insérées, emboîtées ou encliquetées dans la structure, en forme de peigne, du corps de base métallique (2).

4. Pièce de structure selon l'une quelconque des revendications 1 à 3, dans laquelle l'élément de fixation formé (12) entoure au moins partiellement la structure en matière plastique (6), dans sa zone de bordure (Rk).

5. Pièce de structure selon l'une quelconque des revendications 1 à 4, dans laquelle l'élément de fixation formé (12) entoure au moins en forme de u, la structure en matière plastique (6).

6. Pièce de structure selon l'une quelconque des revendications 1 à 5, dans laquelle l'élément de fixation formé (12) entoure, en particulier recouvre, à la façon d'un peigne, la structure en matière plastique (6) dans sa zone de bordure (Rk).

7. Pièce de structure selon l'une quelconque des revendications 1 à 6, dans laquelle l'élément de fixation formé (12) est doté d'au moins un élément de structure, en particulier doté d'une nervure, d'un dos, d'un téton, d'une ouverture.

8. Pièce de structure selon l'une quelconque des revendications 1 à 7, dans laquelle la structure en matière plastique (6) peut être introduite, en particulier insérée, dans un espace creux (H) du corps de base métallique (2) et peut être positionnée et fixée au moyen de l'élément de fixation formé (12).

9. Pièce de structure selon l'une quelconque des revendications 1 à 8, dans laquelle la structure en matière plastique (6), dans sa zone de bordure (Rk), peut être introduite, en particulier clipsée, enfoncée, accrochée et / ou insérée avec le corps de base métallique (2), à l'aide de l'élément de fixation formé (12), par complémentarité de forme et / ou à force, en utilisant un assemblage rabattu, un assemblage emboîté, un assemblage par encliquetage, un assemblage clipsé, un assemblage maté et / ou un assemblage par accrochage.

10. Pièce de structure selon l'une quelconque des revendications 7. à 9, dans laquelle la structure en matière plastique (6), dans sa zone de bordure (Rk), est assemblée avec le corps de base métallique (2), en outre par continuité de matière, en utilisant un assemblage collé, un assemblage de matière plastique moulée par injection, un assemblage brasé et / ou un assemblage soudé.

11. Pièce de structure selon l'une quelconque des revendication 1 à 10, dans laquelle la structure en matière plastique (6) peut être assemblée avec le corps de base métallique (2), dans leurs zones de bordure (Rg, Rk), en outre au moyen d'un élément d'assemblage distinct, en particulier au moyen d'une bride de fixation, par exemple une bride de fixation en forme de u.

12. Pièce de structure selon l'une quelconque des revendications 1 à 11, dans laquelle la structure en matière plastique (6) est configurée comme une structure de renfort et / ou une structure de guidage.

13. Pièce de structure selon l'une quelconque des revendications 7. à 12, dans laquelle la structure en matière plastique (6) est configurée en une ou en plusieurs parties.

14. Pièce de structure selon l'une quelconque des revendications 1 à 13, dans laquelle la structure en matière plastique (6) est formée par une matière thermoplastique, en particulier une matière plastique renforcée par des fibres et / ou remplie de fibres.

15. Pièce de structure selon l'une quelconque des revendications 1 à 14, dans laquelle le corps de base métallique (2) est constitué d'un métal léger, en particulier de l'aluminium, du magnésium ou du titane, ou bien d'acier fin, et présente une épaisseur de paroi comprise entre 0,4 mm et 1,5 mm.

16. Pièce de structure selon l'une quelconque des revendications 1 à 15, dans laquelle le corps de base métallique (2) est réalisé comme un profilé creux, en particulier comme un profilé creux ouvert, par exemple comme un profilé chapeau comportant un bord (Rg) s'étendant sur un côté ou sur les deux côtés, le long de l'axe longitudinal du profilé creux.

17. Utilisation d'une pièce de structure (1) selon l'une quelconque des revendications 1 à 16, comme support de tableau de bord dans un véhicule, comprenant un conduit (8), en particulier un conduit de guidage d'air et / ou un conduit de câbles.

18. Utilisation d'une pièce de structure (1) selon l'une quelconque des revendications 1 à 16, comme élément support dans un véhicule, en particulier comme élément support de montants A, B, C, D, comme longeron, comme seuil de porte de véhicule, comme montant de toit, comme traverse dans un véhicule, en particulier comme traverse entre les montants A d'un véhicule ou bien comme pièce de structure de la partie avant.

19. Procédé de fabrication d'une pièce de structure (1) selon l'une quelconque des revendications 1 à 16, dans lequel un corps de base métallique (2) est doté, dans sa zone de bordure (Rg), d'une structure en forme de peigne servant d'élément de fixation formé (12) dans lequel est positionnée et fixée une structure en matière plastique (6) devant être logée dans un espace creux (H) du corps de base métallique (2), où l'élément de fixation formé (12) du corps de base métallique (2) est transformé, de sorte que la structure en matière plastique (6), dans sa zone de bordure (Rk), est assemblée au moins mécaniquement, à la façon d'un peigne, avec le corps de base métallique (2).

20. Procédé selon la revendication 19, dans lequel l'élément de fixation (12) est recourbé, au moins en forme de u, autour de la zone de bordure (Rk) de la structure en matière plastique (6).

21. Procédé selon la revendication 19 ou 20, dans lequel les zones de bordure (Rg, Rk) - assemblées l'une à l'autre - du corps de base métallique et de la structure en matière plastique (6) sont assemblées l'une à l'autre par complémentarité de forme, à force et / ou par continuité de matière, en particulier rabattues, comprimées, estampées, rivées, vissées, soudées, brasées et / ou collées.

22. Procédé selon l'une quelconque des revendications 19 à 21, dans lequel les zones de bordure (Rg, Rk) - assemblées l'une à l'autre - du corps de base métallique (2) et de la structure en matière plastique (6) sont en outre assemblées l'une à l'autre au moyen d'un élément d'assemblage séparé, en particulier au moyen d'une bride de fixation, d'un clip, d'une vis.

23. Procédé selon l'une quelconque des revendications 19 à 22, dans lequel le corps de base métallique (2) est doté d'un bord (Rg) formant l'élément de fixation (12) et est utilisé comme module préfabriqué.

24. Procédé selon l'une quelconque des revendications 19 à 23, dans lequel la structure en matière plastique (6) est utilisée comme un module préfabriqué, en particulier comme un module en une seule partie ou en plusieurs parties.
